# FASCICULE DE BREVET EUROPEEN

(11) **EP 3 603 381 B1**
(45) Date de publication et mention de la délivrance du brevet: **08.09.2021**
(21) Numéro de dépôt: 19189550.7
(22) Date de dépôt: 01.08.2019
(51) Int. Cl.: A01G 9/12, A01G 13/02, A01G 13/04, A01G 27/00

(54) **DISPOSITIF DE CULTURE, EN PARTICULIER DISPOSITIF DE CULTURE DE TOMATES**
ANBAUVORRICHTUNG, INSBESONDERE ANBAUVORRICHTUNG FÜR TOMATEN
DEVICE FOR CROPS, IN PARTICULAR A DEVICE FOR TOMATO CROPS

(30) Priorité: 01.08.2018 FR 1870887
(43) Date de publication de la demande: 05.02.2020
(73) Titulaire: Van Hulle, Bernard, 7830 Graty (BE)
(72) Inventeur: Van Hulle, Bernard, 7830 Graty (BE)
(74) Mandataire: ABYOO

(56) Documents cités:
- DE-U1- 9 004 425
- FR-A1- 3 010 858
- GB-A- 581 196
- JP-A- S5 718 924
- JP-A- 2000 342 086
- US-A- 310 982
- US-A- 1 351 249
- US-A- 1 711 843
- US-A- 1 805 571
- US-A- 6 088 953
- US-A1- 2011 203 172
- US-B1- 7 624 534

## Description

La présente invention concerne un dispositif de culture de tomates, en particulier un dispositif pour la culture de plantes décoratives, de fruits ou de légumes appropriés tels que des tomates, comprenant un abri et un tuteur de façon à fournir une mini-serre afin de protéger des plants de tomate et favoriser leur croissance.

La qualité des légumes vendus dans les supermarchés est de plus en plus remise en question compte tenu des méthodes de productions intensives (tant d'un point de vue gustatif que de la santé). De plus, les surfaces cultivables sont bien insuffisantes pour nourrir la planète. Dès lors, de plus en plus de personnes veulent cultiver elles-mêmes leurs légumes pour manger des produits sains et bio qui ont du goût, mais de préférence le plus facilement possible et que cela ne prenne pas trop de temps. Les légumes (les tomates en particulier), ont besoin de chaleur, d'eau et de lumière. Pour cela, l'idéal est la serre, mais l'investissement en argent, en surface et en temps est considérable. Il est, en outre, gratifiant de produire soi-même des légumes de qualité.

Le document US5640802 décrit un ensemble de support pour la culture de tomates permettant un accès facile à la plante pendant les différentes étapes de croissance en utilisant des parties interchangeables comprenant des sections postérieures comportant un élément conique sur une extrémité inférieure et une douille conique à l'autre extrémité pour joindre les sections pour former des montants continus ayant des emplacements espacés verticalement, et des supports horizontaux ayant des prises qui s'adaptent solidement sur des sections de montant et espacées verticalement pour former des modules qui peuvent être empilés en relation verticale et ainsi progressivement ajoutés aux besoins engendrés par la croissance de la plante et permettre un accès facile à la plante.

Le document US5067274 décrit un poteau de culture de tomates comprenant un élément allongé ayant une extrémité inférieure pointue qui est sensiblement effilée jusqu'à un point à enfoncer dans le sol et ayant une pluralité d'encoches en forme de V espacées longitudinalement entrant à un angle entre orthogonalement et parallèlement audit élément, chaque encoche convergeant sensiblement uniformément depuis sa partie la plus large à l'entrée du côté dudit poteau jusqu'à sa partie la plus étroite au point de l'encoche la plus à l'intérieur du pôle, avec la partie la plus étroite de chaque encoche étant longitudinalement déplacée sur ledit poteau vers ladite partie inférieure à partir de ladite partie la plus large, de sorte que lorsqu'ils sont entrés partiellement dans le sol à ladite extrémité inférieure, lesdites encoches peuvent recevoir des bâtons et des poteaux de forme et de taille différentes lorsqu'ils sont coincés dans lesdites encoches, avec le poids des bâtons et des poteaux les retenant dans les encoches en raison de l'orientation angulaire des encoches pour supporter un plant de tomate.

Le document US4026068 décrit un support pour les grappes chargées de tomate d'un plant de tomates comprenant trois supports verticaux parallèles espacés circonférentiellement les uns des autres afin de délimiter une zone de croissance centrale pour un plant de tomate, une bague de verrouillage attachés dans une relation d'interconnexion adjacente aux extrémités supérieures desdits supports verticaux, et des moyens pour supporter de manière ajustable lesdites grappes chargées de tomates de telle sorte qu'une grappe puisse être déplacée d'une élévation à une élévation différente, lesdits moyens consistant en des éléments de support attachés à chacun desdits supports verticaux en porte-à-faux avec les extrémités libres légèrement surélevées et s'étendant de façon à lier sensiblement ladite zone de croissance, les éléments de support des supports verticaux adjacents s'étendant sensiblement les uns vers les autres et étant d'une longueur telle qu'un espace est défini entre leurs extrémités libres ledit espace permettant le déplacement d'une grappe d'un support à un autre support à une élévation différente.

Même si de tels dispositifs facilitent la culture des tomates ou d'autres végétaux, un problème majeur subsiste, à savoir que les végétaux restent exposés en permanence aux pluies et à la rosée mais aussi aux insectes ravageurs. Ceci peut se révéler être très problématique puisque la présence d'humidité au niveau des plants et en particulier au niveau des feuillages donne lieu au développement de pathogènes considérables comme des champignons. En ce sens, le mildiou est une maladie très fréquente chez la tomate, elle est causée par un champignon, le Phytophtora infestans. Cette maladie se déclenche assez régulièrement dès qu'il y a trop d'humidité dans l'air et sur les plants, elle se manifeste en pourrissant les tiges, les feuilles et les fruits.

Face à cette problématique, d'autres dispositifs de culture ont été développé comme celui décrit dans le document DE9004425. Ce document décrit un dispositif comprenant un élément central creux muni d'ouvertures sur sa longueur et un élément en plastique souple attaché à l'élément central creux et formant une enveloppe isolant le plant en culture du milieu environnant. A l'extrémité supérieure de l'élément central creux est connecté une sorte d'entonnoir agencé pour collecter les eaux de pluie. L'eau ainsi collectée est dirigée dans l'élément central creux et peut gagner le végétal en culture par passage au travers des ouvertures pratiquées le long de l'élément central creux. Un tel dispositif selon le document DE9004425 permet donc à la fois d'isoler le plant en culture du milieu environnant (pluies, rosée, insectes) mais aussi d'assurer un apport hydrique.

Malheureusement, avec un tel dispositif selon le document DE9004425, il n'est toutefois pas aisé d'accéder au plant lorsqu'il s'agit par exemple d'effectuer des opérations d'entretien (taille, ...) ou la collecte des fruits/légumes issus de ce plant. L'opérateur doit en effet soit enlever complétement cette enveloppe afin de pouvoir accéder au plant, soit laisser tomber cette enveloppe au niveau du sol auquel cas il l'endommagerait en marchant dessus, soit rouler l'enveloppe sur elle-même et tenter qu'elle reste en place lors des opérations d'entretien et/ou de collecte. Dans tous les cas, avec un dispositif de culture selon le document DE9004425, l'enveloppe constitue un élément gênant pour l'opérateur dès lors que ce dernier souhaite accéder au plant. Par ailleurs, les manipulations à effectuer avec l'enveloppe afin d'accéder au(x) plant(s) en culture sont contraignantes, requièrent du temps et comportent le risque d'endommager l'enveloppe elle-même.

La nécessité de surmonter les problèmes rencontrés sur les dispositifs existants a conduit à la présente invention.

Plus particulièrement, pour surmonter les problèmes rencontrés avec les dispositifs connus de l'états de la technique, la présente invention porte sur un dispositif de culture, en particulier dispositif de culture de tomates, comprenant :
- un tuteur de plante central, et
- un couvercle, en particulier un couvercle transparent, présentant une première position basse selon laquelle il entoure ledit tuteur de plante central et une deuxième position haute selon laquelle ledit tuteur de plante central est accessible,

ledit dispositif de culture étant caractérisé en ce qu'il comprend un dispositif de soutien dudit couvercle agencé pour que ledit couvercle reste soutenu lorsqu'il se trouve dans sa deuxième position, et en ce que
ledit couvercle comprend une pluralité de sections télescopiques de façon concentrique et une section supérieure ayant une surface supérieure concave comprenant un drain formant un point d'attache central pour ledit tuteur.

Par les termes « un dispositif de soutien dudit couvercle agencé pour que ledit couvercle reste soutenu lorsqu'il se trouve dans sa deuxième position », il est entendu, au sens de la présente invention, que le couvercle est soutenu ou maintenu ou supporté dans sa deuxième position par l'intermédiaire du dispositif de soutien du couvercle.

Avec un tel dispositif de culture selon l'invention, le ou les plant(s) en culture sont isolés/protégés du milieu environnant (pluies, rosées, insectes ravageurs), un apport hydrique étant assuré par l'intermédiaire de la surface supérieure concave comprenant un drain. Ceci permet de s'affranchir des maladies dues à la présence d'une humidité excessive au niveau des feuillages notamment en cas de pluie. Par ailleurs, dès lors que le dispositif de culture selon l'invention comprend un dispositif de soutien du couvercle agencé pour que le couvercle reste soutenu lorsqu'il se trouve dans sa deuxième position, le couvercle ne gêne à aucun moment l'opérateur qui souhaite accéder au(x) plant(s) en culture pour y effectuer des opérations d'entretien et/ou de collecte. En effet, une fois en deuxième position haute, le couvercle reste maintenu/supporté/soutenu par un dispositif de soutien et ne constitue ainsi aucune gêne et aucun obstacle pour l'opérateur. Notons encore que, puisque le couvercle d'un dispositif de culture selon l'invention comprend une pluralité de sections télescopiques de façon concentrique, il est particulièrement aisé d'accéder au(x) plant(s) en culture d'une parce ce que les sections sont télescopiques et s'emboitent les unes autour des autres et, d'autre part, parce que le dispositif de soutien permet que le couvercle reste soutenu lorsqu'il se trouve dans sa deuxième position.

Selon l'invention, le drain présent au niveau de la surface inférieure concave de la section supérieure du couvercle forme un point d'attache central pour le tuteur. Le drain peut s'emboiter autour des parois du tuteur ou dans le tuteur. Selon un premier mode de réalisation, il est prévu que l'eau drainée ruisselle le long du tuteur, lequel peut alors présenter un corps plein. Selon un autre mode de réalisation préféré, il est prévu que l'eau drainée gagne le corps creux du tuteur qui forme alors un tuyau amenant l'eau au niveau du ou des plant(s) en culture, en particulier au niveau du pied du ou des plant(s) en culture.

Avantageusement, selon l'invention, ledit dispositif de soutien dudit couvercle est constitué :
a) d'un cadre comprenant
   - des éléments verticaux dont une première extrémité peut être insérée dans un sol ou posée sur le sol, et
   - une structure supportant ledit couvercle, ladite structure étant fixée à une deuxième extrémité des éléments verticaux opposée à la première extrémité des éléments verticaux ; ou
b) d'un squelette compris par ledit couvercle, ledit squelette formant un renforcement interne dudit couvercle et se fixant sur ledit tuteur de plante central.

De préférence, selon l'invention, ledit couvercle décrit un extérieur cylindrique configuré pour entourer ledit tuteur de tous les côtés et pour fournir un espace équidistal autour dudit tuteur.

Avantageusement, selon l'invention, lesdites sections sont à parois rigides.

De préférence, selon l'invention, chacune desdites sections présente un bord inférieur et un bord supérieur, un bord inférieur d'une première section et un bord supérieur d'une deuxième section adjacentes s'engageant l'un avec l'autre lorsque ledit couvercle est déplacé depuis la première position basse vers la deuxième position haute.

Avantageusement, selon l'invention, ledit tuteur est configuré de manière hélicoïdale.

De préférence, selon l'invention, ledit tuteur comprend des perforations pour que l'eau s'échappe au-dessus du niveau du sol.

Avantageusement, le dispositif selon l'invention comprend un verrou ou analogue agencé pour bloquer lesdites sections dans ladite deuxième position haute.

Préférentiellement, selon l'invention, ledit verrou comprend une accroche située sur une section la plus inférieure du couvercle et un crochet situé au niveau de ladite section supérieure et étant agencée pour accueillir ladite accroche, ou inversement.

Le couvercle autour du support fournit donc une protection et de cette manière, la plante peut être supportée du sol vers le haut et protégée à tout moment de la pluie par le dessus et les côtés en même temps lorsque le dispositif est en première position, tout en permettant à son utilisateur d'accéder à la plante sur toute sa longueur et de permettre une aération.

Dans certains modes de réalisation, le couvercle décrit un extérieur cylindrique, configuré pour entourer le tuteur de tous les côtés et fournir un espace équidistal autour du tuteur.

Le couvercle peut être soutenu par un cadre, lequel cadre garantit que le couvercle n'applique aucun poids direct sur le tuteur ou le sol. De cette manière, même lorsque le couvercle est en deuxième position, le couvercle reste supporté. Le cadre peut comprendre des éléments verticaux allongés, que l'on peut envisager de situer en bordure du couvercle lors de l'utilisation, et une structure supportant le couvercle, telle qu'une bague ou une roue, qui peut joindre les éléments verticaux. Le couvercle peut se clipser sur ou par-dessus le cadre en cours d'utilisation. Les éléments de cadre peuvent comprendre un moyen de fixation au sol, ou des pointes.

Des ancrages fixés sur le couvercle permettent de réaliser un haubanage pour une plus grande stabilité en cas de vent.

Dans certains modes de réalisation, le couvercle comprend une section supérieure, laquelle section supérieure peut comprendre la structure de support pour le tuteur, ou une partie de celui-ci.

La section supérieure peut être une partie d'un couvercle à multiple sections. Ces sections peuvent être configurées pour se télescoper de manière coaxiale. La section supérieure peut être plus large que les sections plus basses de façon à ce que les sections se télescopent dans la section supérieure lors de l'utilisation. De plus ou alternativement une telle configuration garantit le maintien de la chaleur dans le couvercle. Les sections peuvent être à parois rigides et s'emboîtent afin de fournir un maximum de stabilité et un espace défini pour permettre à la plante de pousser.

Par exemple, dans certains modes de réalisation, le dessus comprend une face supérieure circulaire sur laquelle le tuteur est fixé. Par exemple, le dessus peut avoir une face inférieure agencée pour accepter ou fixer le tuteur centralement.

Dans certains modes de réalisation, le tuteur est configuré de manière hélicoïdale, par exemple de sorte que le tuteur s'élève en spirale lors de l'utilisation, permettant au plant de tomate de suivre les spirales et d'être supporté dans une pluralité d'emplacements.

Le couvercle peut être totalement ou partiellement transparent ou translucide. Par exemple, le couvercle peut être réalisé dans des matériaux thermoplastiques transparents tels que l'acrylonitrile-butadiène-styrène (ABS) ou similaires et est fortement rigide. Dans d'autres modes de réalisation, le couvercle peut comprendre un couvercle en plastique souple, qui peut avoir des parties rigides ou inflexibles pour former un cadre.

Le couvercle peut être reconfigurable verticalement, de manière à passer d'une position à une autre. Dans certains modes de réalisation, le couvercle peut comprendre des sections télescopiques de façon coaxiale ou concentrique, dans lequel les sections pouvant être télescopées vers le haut pour se déplacer vers la deuxième position. De telles sections peuvent comprendre des formes circulaires annulaires de diamètres décroissants, en particulier de diamètres décroissants depuis le haut du dispositif vers le bas du dispositif.

Les bords supérieurs et inférieurs de ces sections peuvent être configurés pour s'engager lorsque le couvercle est déplacé de la première à la deuxième position et vice-versa.

Par exemple les bords des sections peuvent être configurés pour se verrouiller, ou comporter un verrou de manière à verrouiller la deuxième position. Un tel verrou peut comprendre un système de blocage à clips ou un mécanisme fileté. Ce système de blocage permet de tenir le couvercle dans la deuxième position sans intervention extérieure.

Le couvercle peut comprendre un squelette, lequel squelette peut être envisagé pour servir de maintien au couvercle, ou recouvrir des sections, lorsque le couvercle est dans la deuxième position. Un tel squelette peut comprendre un renforcement interne et dans la deuxième position, il peut être envisagé que le tuteur soutienne le couvercle sans cadre. En particulier, un tel squelette est compris par le couvercle, forme un renforcement interne du couvercle et se fixe sur le tuteur de plante central. Ce squelette constitue donc à lui seul un dispositif de maintien du couvercle dans sa deuxième position haute.

Le couvercle et/ou le tuteur forment un moyen d'irrigation. Selon l'invention, la surface du couvercle ou d'autres parties du couvercle dans certains modes de réalisation peuvent être configurées pour recevoir les précipitations et diriger les précipitations vers les moyens d'irrigation. Ceci permet de guider l'eau collectée par le couvercle jusqu'au pied de la plante sans que celle-ci ne soit en contact avec les feuilles, par exemple permettant à l'eau de passer directement dans le sol.

Selon l'invention, la surface supérieure du couvercle ou le couvercle est incurvée ou concave de manière à diriger toute l'eau de pluie vers un point central, qui peut donc comprendre un drain, lequel drain peut diriger l'eau dans le tuteur. De plus, l'utilisateur peut facilement ajouter lui-même de l'eau à n'importe quel endroit de la surface supérieure.

Le tuteur peut être creux de manière à ce que l'eau puisse s'écouler à travers celui-ci lors de l'utilisation. De cette manière le tuteur fournit une double fonction de guidage de l'eau et de support pour la croissance de la plante.

Dans certains modes de réalisation, les moyens d'irrigation peuvent alors être fournis en partie par agencement du, dans ou par le tuteur, les précipitations étant réparties dans le dispositif par le tuteur. Les précipitations peuvent par exemple être dirigées hors du tuteur au, près ou sous le niveau du sol. Ceci peut avantageusement permettre une irrigation moins agressive et mieux distribuée et ciblée.

Par exemple, le tuteur peut comprendre des perforations au niveau ou à proximité de son extrémité la plus proche du sol.

Dans certains modes de réalisation, les perforations sont trop petites pour permettre le passage d'insectes. L'extrémité peut être configurée pour limiter les attaques d'insectes. Par exemple, l'extrémité du tuteur peut en outre comprendre une jupe flexible ou non configurée pour s'étendre autour du tuteur en cours d'utilisation.

Dans certains modes de réalisation, le couvercle ou le dispositif peut en général comprendre des emplacements d'ancrage ou des ancrages, lesquels ancrages peuvent être envisagés pour fournir des emplacements de fixation pour des cordes de haubanage ou similaires afin de maintenir le dispositif dans un emplacement ou une forme.

L'invention porte sur un dispositif de culture de tomates comprenant un tuteur de plante central disposé verticalement et un couvercle transparent, le couvercle étant configuré pour se déplacer d'une première position entourant le tuteur vers une deuxième position où le tuteur est accessible. En d'autres termes, selon la présente invention, il est fourni un dispositif pour culture de tomates comprenant un tuteur central pour plante configuré verticalement et un couvercle transparent, le couvercle étant configuré pour être déplacé d'une première position entourant le tuteur à une deuxième position où le tuteur est accessible.

Selon l'invention, le couvercle comprend une pluralité de sections télescopiques de façon concentrique.

Selon l'invention, le tuteur comprend un élément hélicoïdal allongé.

Selon l'invention, le couvercle a une section supérieure ayant une surface supérieure concave.

Selon l'invention, la section supérieure comprend un drain formant un point d'attache central pour le tuteur.

Selon l'invention, le tuteur comprend des perforations pour que l'eau s'échappe au-dessus du niveau du sol.

Selon l'invention, le dispositif comprend un crochet permettant de maintenir les sections dans la deuxième position.

D'autres caractéristiques, détails et avantages de l'invention ressortiront des exemples donnés ci-après, à titre non limitatif et en faisant référence aux figures annexées.

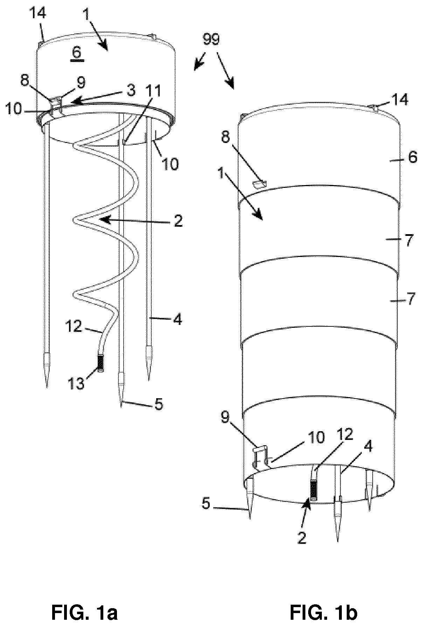

La figure 1a représente une vue isométrique d'un mode de réalisation de l'appareil selon la présente invention dans une deuxième position.
La figure 1b représente une vue isométrique du mode de réalisation de l'appareil représenté dans la Figure 1a, dans une première position.

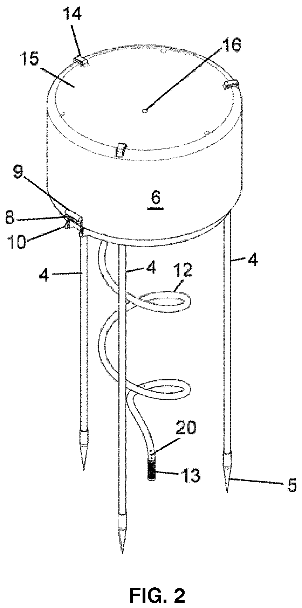

La figure 2 représente une vue isométrique inversée du mode de réalisation de l'appareil représenté dans la Figure 1b, dans la première position.

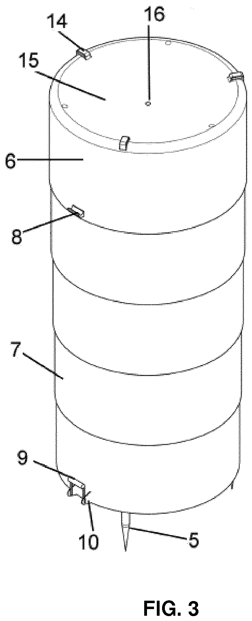

La figure 3 représente une vue isométrique inversée du mode de réalisation de l'appareil représenté dans la Figure 1a, dans la deuxième position.

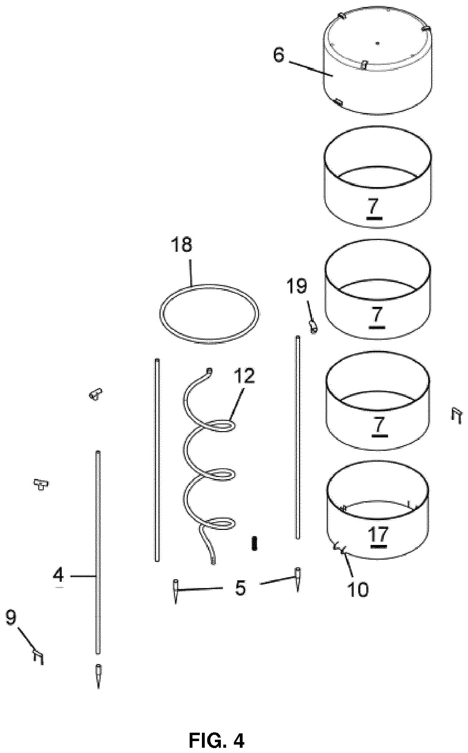

La figure 4 représente une vue isométrique explosée inversée du mode de réalisation de l'appareil représenté dans les Figures 1.

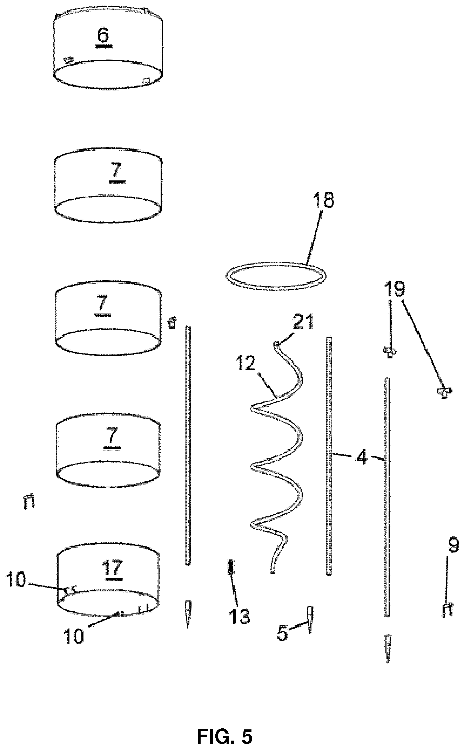

La figure 5 représente une vue isométrique explosée du mode de réalisation de l'appareil représentée dans les Figures 1.

En référence générale au mode de réalisation représenté dans les figures, il est généralement représenté un dispositif de culture de tomates 99 comprenant un tuteur de plante creux 2 et un couvercle 1, le couvercle 1 étant configuré pour être déplacé d'une première position basse entourant le tuteur jusqu'en haut et protégeant la plante à une deuxième position haute où le tuteur, et par conséquent la plante, est accessible.

En se référant en particulier au mode de réalisation représenté sur les figures, le mode de réalisation comprend un couvercle cylindrique 1, composé de plusieurs sections 6, 7, 17; lequel couvercle, dans la première position, entoure le tuteur 2 et n'importe quelle culture végétale par tous les côtés, ainsi que par le dessus, de préférence sur toute la hauteur du tuteur.

Au-dessus du tuteur se trouve la section supérieure ou la section supérieure 6 du couvercle, qui comprend une surface supérieure concave 15, dont les parois convergent en un point central de fixation interne pour le tuteur, plus bas que la hauteur des côtés. Plus particulièrement, ce point de fixation central du tuteur comprend ou constitue un point de drainage 16 coopérant avec le tuteur représenté sous forme d'un élément hélicoïdal allongé 12. Ledit point de drainage peut comprendre un filtre 21 ou une protection perforée situé à l'extrémité supérieure du tuteur, de façon à limiter l'entrée de feuilles ou similaires.

Le tuteur est représenté sous forme d'un élément hélicoïdal allongé 12, en spirale depuis le point de fixation 16 constituant un point de drainage et étant situé à la face inférieure de la surface supérieure concave 15, jusqu'à l'extrémité du capuchon 13, laquelle extrémité de capuchon 13 peut être insérée dans le sol en cours d'utilisation. Au-dessus de l'extrémité du capuchon 13 se trouvent une pluralité de perforations 20, de manière à permettre à l'eau de sortir au niveau, au-dessus ou près du sol lors de l'utilisation. Les perforations 20 sont suffisamment petites pour limiter la pénétration d'insectes.

L'extrémité supérieure du tuteur présente une liaison fluidique avec la face supérieure du couvercle, de manière à permettre un passage fluidique au niveau du point de drainage 16.

En interne, le tuteur comprend une voie fluidique. De cette manière, avantageusement, toute eau ou pluie reçue sur la surface supérieure du couvercle 15 est dirigée à travers le tuteur 2 et évacuée près du niveau du sol, limitant les dommages pouvant être causés à la plante.

La couverture/le couvercle comprend un matériau thermoplastique transparent et est fortement rigide. Le couvercle comprend une section supérieure 6, trois sections médianes dont le diamètre décroit progressivement 7 et une dernière section inférieure 17, toutes les sections (c'est-à-dire l'ensemble des sections) pouvant être bloquées en deuxième position par un verrou 3. La section inférieure 17 a deux attaches élastiquement déformables 10 à proximité du bord inférieur de la section inférieure supportant deux bras fournissant une base pour une accroche clipsable 9, de telle sorte que la déformation des attaches permet le déplacement de l'accroche clipsable 9 qui peut être subséquemment configuré pour être clipsé sur un crochet 8 s'étendant du côté de la section supérieure, lequel crochet 8 est situé à proximité du bord inférieur de la section supérieure 6. De cette manière, le couvercle 1 peut être avantageusement clipsé dans la deuxième position pour être maintenu en place pendant que l'utilisateur travaille sur la plante. Le crochet permet aux sections d'être maintenues dans la deuxième position. Il est bien entendu que tout autre moyen/système formant un verrou fait partie intégrante de la présente invention.

Le couvercle 1 est retenu par un cadre formé par trois éléments verticaux 4 et un élément supérieur circulaire 18. L'élément circulaire est fixé aux éléments verticaux au niveau des connecteurs de jonction en T 19. Les extrémités des éléments verticaux sont constituées par des pointes 5, qui peuvent être formées en acier inoxydable de manière à faciliter l'insertion dans le sol. Il peut être envisagé que le cadre soit formé autrement en acier revêtu.

La section de couvercle inférieure 17 comprend en outre des attaches élastiques internes 11 pour les éléments verticaux 4 et, à l'extérieur, trois ancrages de cordes de haubanage 14 espacés de façon égale autour de la circonférence de la surface supérieure 15 de la section.

L'invention a été décrite à titre d'exemples seulement et on notera qu'une variante peut être apportée aux modes de réalisation mentionnés ci-dessus sans s'écarter de la portée de l'invention telle que définie par les revendications, en particulier mais pas uniquement la combinaison des caractéristiques des modes de réalisation décrits.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus.

L'usage des verbes « comprendre », « inclure », « comporter », ainsi que leurs conjugaisons, ne peut en aucune façon exclure la présence d'éléments autres que ceux mentionnés.

L'usage de l'article indéfini « un », « une », ou de l'article défini « le », « la » ou « l' », pour introduire un élément n'exclut pas la présence d'une pluralité de ces éléments.

## Revendications

1. Dispositif de culture, en particulier dispositif de culture de tomates, comprenant :
- un tuteur de plante central (2), et
- un couvercle (1), en particulier un couvercle transparent (1), présentant une première position basse selon laquelle il entoure ledit tuteur de plante central (2) et une deuxième position haute selon laquelle ledit tuteur de plante central (2) est accessible,
ledit dispositif de culture étant **caractérisé en ce qu'**il comprend un dispositif de soutien dudit couvercle (1) agencé pour que ledit couvercle (1) reste soutenu lorsqu'il se trouve dans sa deuxième position, et **en ce que** ledit couvercle (1) comprend une pluralité de sections télescopiques (6, 7, 17) de façon concentrique et une section supérieure (6) ayant une surface supérieure concave (15) comprenant un drain (16) formant un point d'attache central pour ledit tuteur (2).

2. Dispositif selon la revendication 1, **caractérisé en ce que** ledit dispositif de soutien dudit couvercle (1) est constitué :
a) d'un cadre comprenant
- des éléments verticaux (4) dont une première extrémité peut être insérée dans un sol ou posée sur le sol, et
- une structure (18) supportant ledit couvercle (1), ladite structure (18) étant fixée à une deuxième extrémité des éléments verticaux (4) opposée à la première extrémité des éléments verticaux (4) ;
ou
b) d'un squelette compris par ledit couvercle (1), ledit squelette formant un renforcement interne dudit couvercle (1) et se fixant sur ledit tuteur de plante central (2).

3. Dispositif selon la revendication 1 ou 2, **caractérisé en ce que** ledit couvercle (1) décrit un extérieur cylindrique configuré pour entourer ledit tuteur (2) de tous les côtés et pour fournir un espace équidistal autour dudit tuteur (2).

4. Dispositif selon l'une quelconque des revendication précédentes, **caractérisé en ce que** lesdites sections (6, 7, 17) sont à parois rigides.

5. Dispositif selon l'une quelconque des revendication précédentes, **caractérisé en ce que** chacune desdites sections (6, 7, 17) présente un bord inférieur et un bord supérieur, un bord inférieur d'une première section et un bord supérieur d'une deuxième section adjacentes s'engageant l'un avec l'autre lorsque ledit couvercle (1) est déplacé depuis la première position basse vers la deuxième position haute.

6. Dispositif selon l'une quelconque des revendication précédentes, **caractérisé en ce que** ledit tuteur (2) est configuré de manière hélicoïdale.

7. Dispositif selon l'une quelconque des revendication précédentes, **caractérisé en ce que** ledit tuteur (2) comprend des perforations (20) pour que l'eau s'échappe au-dessus du niveau du sol.

8. Dispositif selon l'une quelconque des revendication précédentes, **caractérisé en ce qu'**il comprend un verrou (3) ou analogue agencé pour bloquer lesdites sections (6, 7, 17) dans ladite deuxième position haute.

9. Dispositif selon la revendication 8, **caractérisé en ce que** ledit verrou (3) comprend une accroche (9) située sur une section la plus inférieure du couvercle (1) et un crochet (8) situé au niveau de ladite section supérieure (6) et étant agencé pour accueillir ladite accroche (9), ou inversement.

## Patentansprüche

1. Anbauvorrichtung, insbesondere Anbauvorrichtung für Tomaten, umfassend:
- einen zentralen Pflanzstab (2) und
- einen Deckel (1), insbesondere einen transparenten Deckel (1), der eine erste, untere Position aufweist, gemäß der er den genannten zentralen Pflanzstab (2) umgibt, und eine zweite, obere Position, gemäß der der genannte zentrale Pflanzstab (2) erreichbar ist,
wobei die genannte Anbauvorrichtung **dadurch gekennzeichnet ist, dass** sie eine Stützvorrichtung des genannten Deckels (1) umfasst, die angeordnet ist, damit der genannte Deckel (1) unterstützt bleibt, wenn er sich in seiner zweiten Position befindet, und dass
der genannte Deckel (1) eine Vielzahl von teleskopischen Abschnitten (6, 7, 17) auf konzentrische Weise umfasst und wobei ein oberer Abschnitt (6) eine obere, konkave Fläche (15) aufweist, umfassend einen Drain (16), der einen zentralen Befestigungspunkt für den genannten Pflanzstab (2) bildet.

2. Vorrichtung gemäß Anspruch 1, **dadurch gekennzeichnet, dass** die genannte Stützvorrichtung des genannten Deckels (1) gebildet ist aus:
a) einem Rahmen, umfassend
- vertikale Elemente (4), von denen ein erstes Ende in einen Boden eingefügt oder auf den Boden gelegt sein kann, und
- eine Struktur (18), die den genannten Deckel (1) trägt, wobei die genannte Struktur (18) an einem zweiten Ende der vertikalen Elemente (4) befestigt ist, die dem ersten Ende der vertikalen Elemente (4) entgegengesetzt ist,
oder
b) einem von dem genannten Deckel (1) umfassten Skelett, wobei das genannte Skelett eine interne Verstärkung des genannten Deckels (1) bildet und auf dem genannten zentralen Pflanzstab (2) befestigt ist.

3. Vorrichtung gemäß Anspruch 1 oder 2, **dadurch gekennzeichnet, dass** der genannte Deckel (1) ein zylindrisches Äußeres beschreibt, das ausgestaltet ist, um den genannten Stab (2) von allen Seiten zu umgeben und um einen Raum mit gleichem Abstand um den genannten Stab (2) zu liefern.

4. Vorrichtung gemäß irgendeinem der voranstehenden Ansprüche, **dadurch gekennzeichnet, dass** die genannten Abschnitte (6, 7, 17) steife Wände aufweisen.

5. Vorrichtung gemäß irgendeinem der voranstehenden Ansprüche, **dadurch gekennzeichnet, dass** jeder der genannten Abschnitte (6, 7, 17) einen unteren Rand und einen oberen Rand aufweist, wobei ein unterer Rand eines ersten anliegenden Abschnitts und ein oberer Rand eines zweiten anliegenden Abschnitts ineinander eingreifen, wenn der genannte Deckel (1) von der ersten unteren Position in die zweite obere Position verschoben ist.

6. Vorrichtung gemäß irgendeinem der voranstehenden Ansprüche, **dadurch gekennzeichnet, dass** der genannte Stab (2) schneckenförmig ausgestaltet ist.

7. Vorrichtung gemäß irgendeinem der voranstehenden Ansprüche, **dadurch gekennzeichnet, dass** der genannte Stab (2) Perforierungen (20) umfasst, damit das Wasser oberhalb der Höhe des Bodens ablaufen kann.

8. Vorrichtung gemäß irgendeinem der voranstehenden Ansprüche, **dadurch gekennzeichnet, dass** sie einen Riegel (3) oder dergleichen umfasst, der zum Blockieren der genannten Abschnitte (6, 7, 17) in der genannten zweiten, oberen Position angeordnet ist.

9. Vorrichtung gemäß Anspruch 8, **dadurch gekennzeichnet, dass** der genannte Riegel (3) eine Befestigung (9), die auf einem untersten Abschnitt des Deckels (1) angeordnet ist, und einen Haken (8), der an dem genannten oberen Abschnitt (6) angeordnet ist und angeordnet ist, um die genannte Befestigung (9) aufzunehmen oder umgekehrt, umfasst.

## Claims

1. A cultivation device, in particular a tomato cultivation device, comprising:
- a central plant stake (2), and
- a cover (1), in particular a transparent cover (1), having a first low position according to which it surrounds said central plant stake (2) and a second high position according to which said central plant stake (2) is accessible,
said cultivation device being **characterized in that** it comprises a device for supporting said cover (1), arranged such that said cover (1) remains supported when it is in its second position,
and **in that**
said cover (1) comprises multiple concentrically telescoping sections (6, 7, 17) and an upper section (6) having a concave upper surface (15) comprising a drain (16) forming a central attachment point for said stake (2).

2. Device according to Claim 1, **characterized in that** the said device for supporting the said cover (1) consists of:
a) a frame comprising
- vertical elements (4), a first end of which can be inserted into the ground or placed on the ground, and
- a structure (18) supporting said cover (1), said structure (18) being fixed to a second end of the vertical elements (4) opposite to the first end of the vertical elements (4);
or
b) a frame made up of said cover (1), said frame forming an internal reinforcement of said cover (1) and being fixed on said central plant stake (2).

3. Device according to claim 1 or 2, **characterized in that** said cover (1) forms a cylindrical exterior configured to surround said stake (2) on all sides and to provide an equidistant space around said stake (2).

4. Device according to any one of the preceding claims, **characterized in that** said sections (6, 7, 17) have rigid walls.

5. Device according to any one of the preceding claims, **characterized in that** each of said sections (6, 7, 17) has a lower edge and an upper edge, a lower edge of a first section and an upper edge of an adjacent second section fitting into each other when said cover (1) is moved from the first low position to the second high position.

6. Device according to any one of the preceding claims, **characterized in that** said stake (2) is configured in a helical manner.

7. Device according to any one of the preceding claims, **characterized in that** the said stake (2) comprises perforations (20) so that water can escape above the level of the ground.

8. Device according to any one of the preceding claims, **characterized in that** it comprises a latch (3) or something similar designed to lock said sections (6, 7, 17) in said second upper position.

9. Device according to claim 8, **characterized in that** said latch (3) comprises a hook (9) located on the lowest section of the cover (1) and a clasp (8) located on said upper section (6) and being designed to receive said hook (9), or vice versa.
